# EUROPEAN PATENT APPLICATION

(11) **EP 1 596 528 A1**
(43) Date of publication of application: **16.11.2005**
(21) Application number: 04703804.7
(22) Date of filing: 21.01.2004
(51) Int. Cl.: H04L 9/30, H04L 9/12, H04N 7/16

(54) **ENCRYPTION AND COPY-PROTECTION SYSTEM BASED ON PERSONALISED CONFIGURATIONS**

(30) Priority: 22.01.2003 ES 200300165
(71) Applicant: Semiconductores Investigacion Y Diseno S.A. -(SIDSA), Tres Cantos, 28760 Madrid (ES)
(72) Inventor: ISENSER FARRE, Jose Maria, Isaac Newton, E-28760 Madrid (ES); SANTOS PEREZ, Carlos, Isaac Newton, s/n, E-28760 Madrid (ES); AVELLANO FERNANDEZ, Jose Luis, E-28760 Madrid (ES); MORAN CARRERA, Javier, E-28760 Madrid (ES)
(74) Representative: Kritzenberger & Zeuner
(86) International application number: PCT/ES2004/000027
(87) International publication number: WO 2004/066551

(57) **Abstract**

The invention relates to an encryption and copy-protection system based on personalised configurations. The invention, which is integrated in a receiver system for digital television networks (satellite, terrestrial or cable) and in video recording and reproduction and local network distribution, protects sensitive information in configuration memory elements which require certain external integrated circuits in order to implement a determined hardware, software or mixed functionality. According to the inventive copy-protection system, the contents of the configuration memory elements are different, unique and personalised for each circuit, such that the configuration memory element of one circuit cannot be used in another circuit. The latter feature is achieved through personalisation and the manner in which the contents of the configuration memory elements are generated.

## Description

### Objective of the invention

The invention presented provides a solution for the protection of sensitive information contained in configuration memories that need some external integrated circuits in order to implement a particular functionality, whether hardware, software or mixed.

In the case of the invention, as a result of the copy protection, its contents are different, unique, and personalized for each circuit, so that the configuration memory of one circuit cannot be used in another circuit. In addition, this feature requires the personalization of each integrated circuit. The invention itself shows the personalization procedures and how to generate the contents of the configuration memories.

The invention would be integrated in a receiver system for digital television networks (satellite, terrestrial or cable), based on the digital video broadcasting (DVB) and common interface (DVB-CI) standard, DBV-CI En50221, and on the distribution on local networks and video recording and play (PVR).

### State of the Art

The static RAM memory-based logical programmable devices and embedded microprocessor-based systems that are part of a receiver system for digital television networks, for example, do not have enough internal, non-volatile memory resources and, therefore, need external ROM or FLASH-type storage memories, whose functionality can be replicated simply by making a copy of those memories. The mechanisms and procedures shown below, intend to provide a very safe solution to this problem.

### Explanation of the invention

There are two different scenarios, depending on whether or not the protection system that is incorporated to the circuit can incorporate a non-volatile, rewriteable memory:

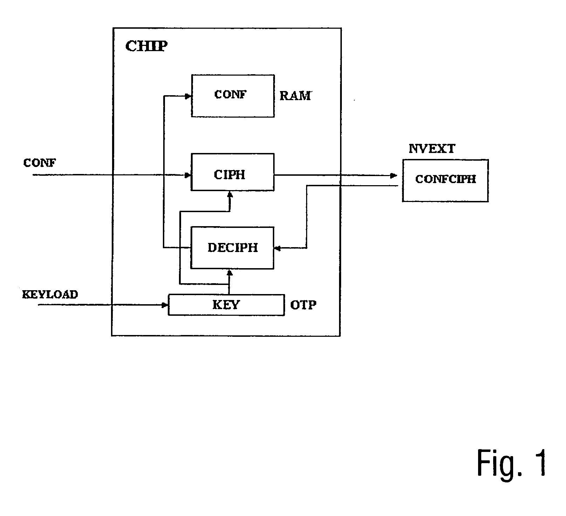

### - Scenario 1 (Figure 1)

Integrated circuit (CHIP) with write-only, embedded, non-volatile memory. In this case, the protection mechanism will consist of a code (KEY) stored in the write-only, non-volatile memory (OTP) that cannot be read by any procedure from the outside, which is a code that connects both to an encryption module (CIPH) and to a de-encryption module (DECIPH) whose function is the exact opposite of the CIPH, both also embedded in the circuit. The input of the encryption module is accessible from outside, while its output is connected to the configuration memory (INVEXT). The de-encryption module has its input connected to the configuration memory, while its output is connected to an internal, volatile memory (RAM), not accessible from the outside and on which the circuit will operate in the end.

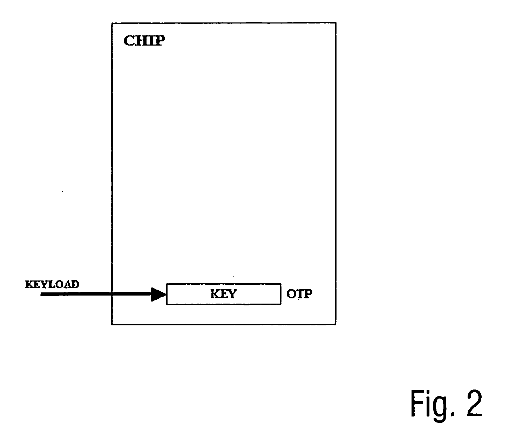

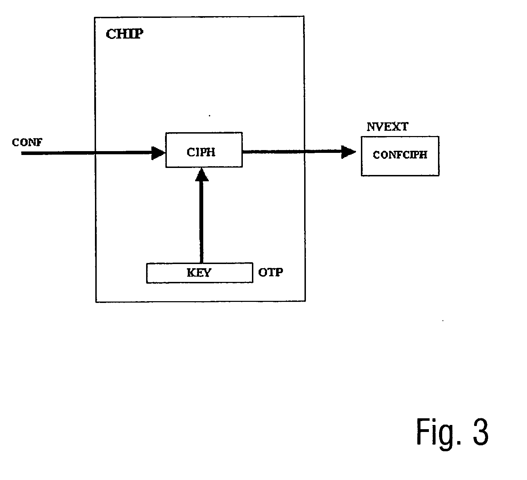

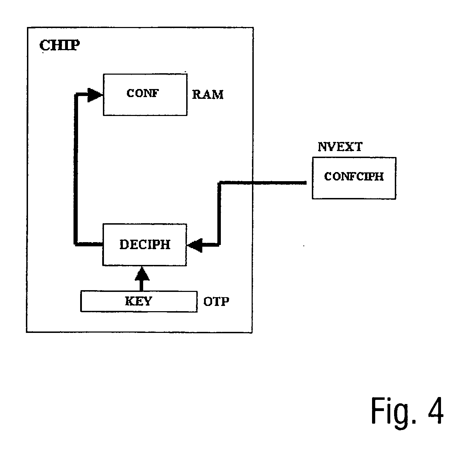

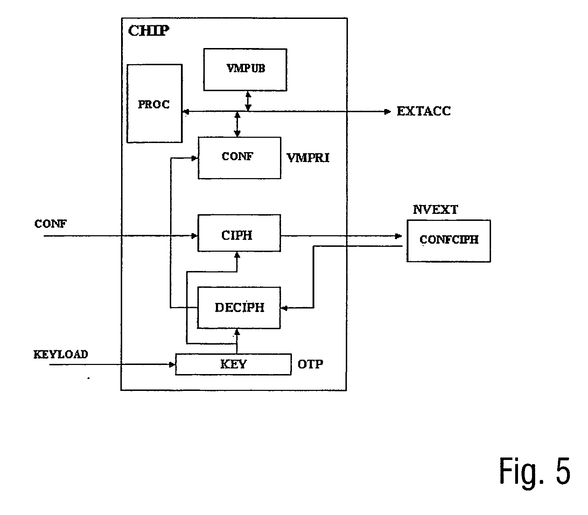

The procedures associated with this scenario are the following:
Circuit personalization procedure (Figure 2): The code will be written at random (KEYLOAD) through an external access reserved for such purpose, on the circuits without having any record of the numbers being loaded or on which chip, since this is not necessary for the content protection procedure. In addition, not knowing this code increases the safety. This personalization procedure can be performed directly by the circuit manufacturer.
Configuration memory loading procedure (Figure 3): This procedure consists of loading the configuration memory by passing the unencrypted content (CONF) through the circuit, encrypting it with the aforementioned embedded mechanism, and then sending it to the external memory. This way, the content that resides in the external, non-volatile memory (CONFCIPH) will be protected and exclusive for that circuit.
Loading procedure from the configuration memory and circuit start-up in functional mode (Figure 4): In the functional mode, the circuit will recover at start-up the CONFCIPH configuration, by passing the encrypted content of the external memory through the DECIPH de-encryption module and placing it in the concealed, internal, volatile memory (RAM) that will clearly contain the CONF configuration and the circuit will operate from it. Even though this procedure may be sufficient to configure programmable logic, embedded processor schemes (PROC) need reading and writing access from this internal memory to the outside (EXTACC) for debugging and handling flexibility. A private/public internal memory scheme (Figure 5) is proposed in order to solve this problem:

Public volatile (RAM) memory (VMPUB): The embedded processor will have writing and reading access to this memory, which will also be accessible from the outside (EXTACC).

Private volatile (RAM) memory (VMPRI): The processor will have writing and execution access only, without being able to read data. This prevents the transfer of instructions from private to public zones.

Under this scheme, the external non-volatile memory may be considered as an extension of the public memory and the transaction in functional start-up mode will be performed on the VMPRI private zone.

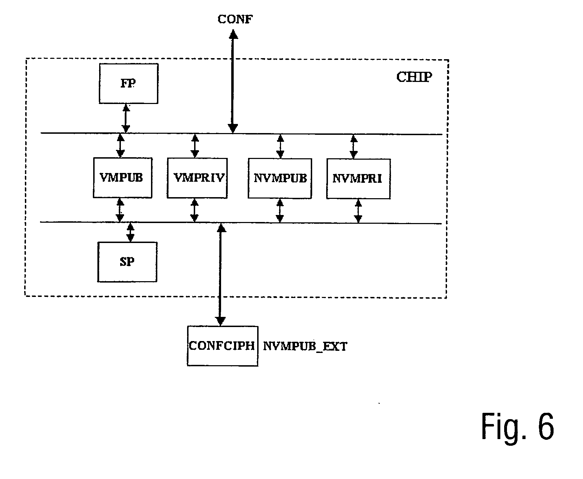

### - Scenario 2 (Figure 6)

Circuit with embedded, rewriteable, non-volatile memory. In this case, a more sturdy system can be built since it allows for future changes of codes and algorithms, which is not possible in scenario 1. The system is based on common memory zones and two processors, one functional (FP) and one for safety (SP). The purpose of the safety processor is to implement the coding and decoding algorithm of the external, non-volatile memory, in addition to providing protected functions to the FP functional processor. The private zones exist inside the chip only, while the public zones can be embedded or external to the integrated circuit. Its definition, connection and access privileges are as follows:
Public volatile (RAM) memory (VMPUB): Both the FP and SP will have writing and reading access to this memory, in addition to being accessible from the outside.
Public rewriteable (FLASH) non-volatile memory (NVMPUB): Both the FP and SP will have writing and reading access to this memory, in addition to being accessible from the outside. Within the memory map of both processors, the external configuration memory is associated with this zone (NVMPUB_EXT).
Private volatile (RAM) memory (VMPRI): FP will only have writing access to this memory, while SP will be able to perform writing and reading functions.
Private, rewriteable (FLASH) non-volatile memory (NVMPRI): Both the FP and SP will have instruction writing and execution access only to this memory. None of the processors may read data in order to avoid the transfer of instructions from private to public zones.

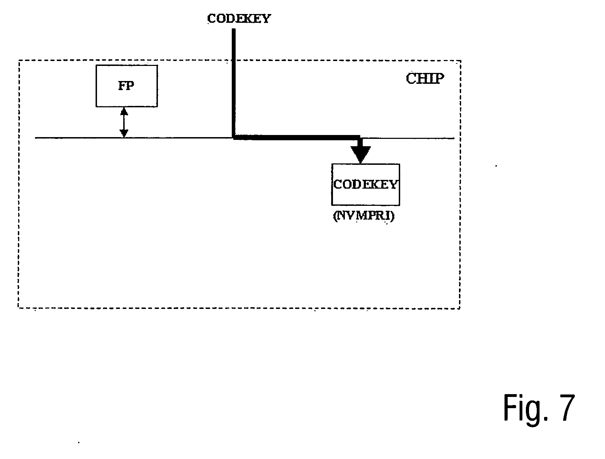

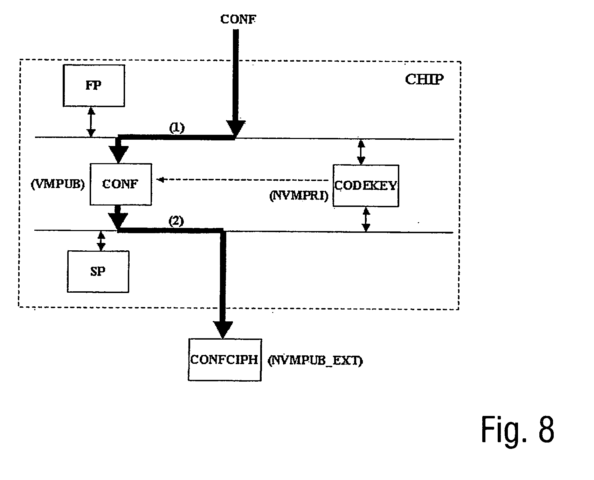

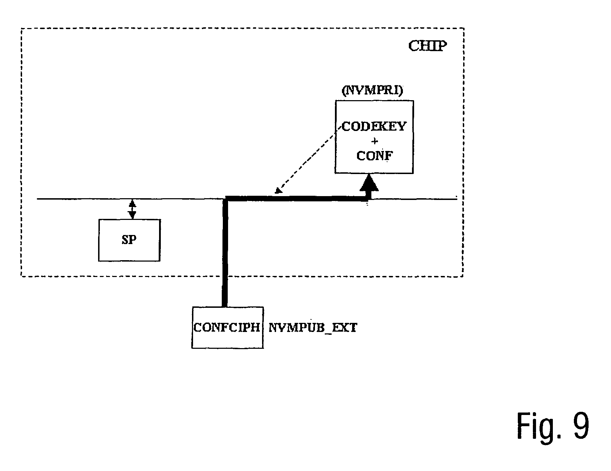

The procedures associated with this scenario are the following:
Circuit personalization procedure (Figure 7): A program will be loaded in the internal non-volatile memories (NVMPUB and NVMPRI), so that the most sensible part (CODEKEY) will be stored in NVMPRI with the encryption function, to be executed later from the SP. The circuit's exclusive code will be implied in the execution of a code segment, different for each circuit, that resides in the NVMPRI memory (the code cannot be a constant, since data reading is not allowed in this memory). The loading operation for this code will be coordinated by the FP processor.
Configuration memory loading procedure (Figure 8): This procedure consists of loading the external, public configuration memory by passing the unencrypted content (CONF) through the circuit, encrypting it with the encryption function executed by SP from its private memory and then, once encrypted, sending it to the external memory. This way, the content that resides in the external, non-volatile memory will be protected and exclusive for that circuit. The loading operation is coordinated from the FP processor, and is performed in two steps: First (see (1) in Figure 8), the configuration is deposited into the VMPUB public memory, and then (see (2) in Figure 8), a command is given to the SP safety processor to take the information from this memory, encrypt it by executing CODEKEY, and then write the protected information to the external, non-volatile memory.
Loading procedure from the configuration memory and circuit start-up in functional mode (Figure 9): In the functional mode, the circuit will recover at start-up the configuration, by passing the encrypted content of the external memory through the de-encryption function implemented by SP and placing it in the read-protected NVMPRI private memory that will clearly contain the configuration from which the FP functional processor will operate.

## Claims

1. Circuit solution embedded in integrated circuits that need an external configuration **characterized by** the implementation of an information protection mechanism that consists of introducing a code (KEY) stored in the write-only, non-volatile memory (OTP) that cannot be read by any procedure from the outside, which is a code that connects both to an encryption module (CIPH) and to a de-encryption module (DECIPH) whose function is the exact opposite of the CIPH, both also embedded in the circuit. The de-encryption module has its input connected to the configuration memory, while its output is connected to an internal, volatile memory (RAM), not accessible from the outside and on which the circuit will operate in the end.

2. Circuit personalization procedure associated with claim 1, **characterized by** the fact that the code will be written at random (KEYLOAD) through an external access reserved for such purpose, on the circuits, without having any record of the numbers being loaded or on which chip, since this is not necessary for the content protection procedure; in addition, not knowing this code increases the safety.

3. Configuration memory loading procedure associated with claim 1, **characterized by** the fact that the unencrypted content (CONF) is passed through the circuit, encrypting it with the aforementioned embedded mechanism, and then sending it to the external memory. This way, the content that resides in the external, non-volatile memory (CONFCIPH) will be protected and exclusive for that circuit.

4. Loading procedure from the configuration memory and start-up in functional mode of the circuit described in claim 1, **characterized by** the fact that the circuit will recover at start-up the CONFCIPH configuration, by passing the encrypted content of the concealed, internal volatile memory (RAM) that will contain the CONF configuration from which the circuit will operate. Since embedded processor schemes (PROC) need reading and writing access from this internal memory to the outside (EXTACC) for debugging and handling flexibility, the invention is **characterized by** the proposal of a private/public internal memory scheme.

5. Applicable public/private volatile memory (VMPUB and VMPRI) scheme, mainly in embedded processors, **characterized by** the fact that the external non-volatile memory may be considered as an extension of the public memory, while the transaction in functional start-up mode will be performed on the private zone.

6. Circuit solution to be embedded within integrated circuits, **characterized by** the implementation of an information protection mechanism based on common memory zones and two processors, a functional one (FP) and a safety one (SP). The purpose of the safety processor is to implement the coding and decoding algorithm of the external, non-volatile memory, in addition to providing protected functions to the FP functional processor. The private zones exist inside the chip only, while the public zones can be embedded or external to the integrated circuit.

7. Circuit personalization procedure associated with claim 1, **characterized by** the fact that a program will be loaded in the internal non-volatile memories (NVMPUB and NVMPRI), so that the most sensible part (CODEKEY) will be stored in NVMPRI with the encryption function, to be executed later from the safety processor (SP). The circuit's exclusive code will be implied in the execution of a code segment, different for each circuit, which resides in the NVMPRI memory. The loading operation for this code will be coordinated by the FP processor.

8. Configuration memory loading procedure, **characterized by** loading the external, public configuration memory by passing the CONF unencrypted content through the circuit, encrypting it with the encryption function executed by SP from its private memory and then, once encrypted, sending it to the external memory. This way, the content that resides in the external, non-volatile memory will be protected and exclusive for that circuit. The loading operation is coordinated from the FP processor, and is performed in two steps: First (see (1) in Figure 8), the configuration is deposited into the VMPUB public memory, and then (see (2) in Figure 8), a command is given to the SP safety processor to take the information from this memory, encrypt it by executing CODEKEY, and then write the protected information to the external, non-volatile memory.

9. Loading procedure from the configuration memory and start-up in functional mode of the circuit described in scenario 2. In the functional mode, the circuit will recover at start-up the configuration, by passing the encrypted content of the external memory through the de-encryption function implemented by SP and placing it in the read-protected NVMPRI private memory that will clearly contain the configuration from which the FP functional processor will operate.
